Europäisches Patentamt

European Patent Office

Office européen des brevets

(11) Publication number: **0 114 813**
**B1**

# EUROPEAN PATENT SPECIFICATION

(45) Date of publication of patent specification: **20.09.89**

(51) Int. Cl.⁴: **H 02 G 3/22**

(21) Application number: **82902626.9**

(22) Date of filing: **26.07.82**

(86) International application number:
**PCT/US82/01024**

(87) International publication number:
**WO 84/00646 16.02.84 Gazette 84/05**

(54) **STUFFING TUBE.**

(43) Date of publication of application:
**08.08.84 Bulletin 84/32**

(45) Publication of the grant of the patent:
**20.09.89 Bulletin 89/38**

(84) Designated Contracting States:
**GB**

(56) References cited:
**CH-A- 428 881**
**DE-B-1 023 108**
**US-A-1 814 478**
**US-A-2 151 096**
**US-A-2 788 992**
**US-A-2 795 641**
**US-A-2 913 260**
**US-A-3 058 762**
**US-A-3 082 470**
**US-A-3 635 502**

(73) Proprietor: **Perrault, Frederick**
**2644 West 225th Street**
**Torrance, California 90505 (US)**
(73) Proprietor: **Perrault, Raymond E.**
**2404 Colt Road**
**Rancho Palos Verdes, California 90274 (US)**

(72) Inventor: **Perrault, Frederick**
**2644 West 225th Street**
**Torrance, California 90505 (US)**
Inventor: **Perrault, Raymond E.**
**2404 Colt Road**
**Rancho Palos Verdes, California 90274 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

The construction of naval ships calls for the use of stuffing tubes where electrical cables are extended through bulkheads and decks. These stuffing tubes include tubular bodies fitted through openings in the bulkheads and decks and welded into place. An asbestos composition seal is within the stuffing tube around the cable, and various machined parts are used to compress the seal so as to substantially prevent air flow from one side of the bulkhead or deck to the other. Inasmuch as the electrical cables come in many different diameters, a comparable number of sizes of tubular bodies has been necessary for conventional stuffing tubes. For example, twenty-three sizes of tube bodies have been required, with similar numbers of the internal parts making up the stuffing tube assembly. The large number of parts has added to the cost of the inventory to be maintained and made stuffing tube installations complex. In addition, when cable routing assignments are changed during ship construction, as occurs from time to time, changing the size of cable at tube bodies previously welded into place, it has been necessary to cut the tube bodies out of the deck and bulkheads and replace them with those of different sizes. This obviously is a very expensive and time-consuming operation.

Another problem arises in ship overhaul and refurbishing. This causes frequent change in the size of electrical cables, usually a reduction in size due to the different electrical requirements of modern electronic equipment. This has meant that the old tubular bodies have had to be cut out of the bulkheads and decks and replaced with new and different sized tubular bodies. Again, the cost has been very high and the time required has been excessive.

Many prior stuffing tube installations also have a tendency to leak, requiring a great deal of time and expense in reworking to make them substantially airtight in accordance with specifications.

US-A-2788992 discloses a stuffing tube device of conventional type in which screwing up of a gland nut compresses and distorts a seal into sealing relationship with a cable and a surrounding tubular part which is itself sealed in an opening in a partition.

According to the invention, a stuffing tube device for providing a seal around an electrical cable or the like extending through a partition such as a bulkhead or deck of a ship, comprises a tube having a first portion of a first diameter, a second portion of a second and larger diameter, and a shoulder between the first and second portions; a separate member having a tapered portion the exterior of which engages the shoulder, a straight cylindrical section at the inner end of the tapered portion, and an opening therethrough adapted to receive an electrical cable or the like; a washer in the second portion of the tube; a screw threaded member adjacent to the washer and having screw threads meshing with screw threads of the second portion of the tube, whereby the screw threaded member can force the washer inwardly of the tube upon relative advancement of the screw threads; and a seal between the washer and the separate member, one end of the seal engaging the washer and the opposite end of the seal engaging the tapered portion, whereby upon such relative advancement, the seal is compressed for providing a seal around an electrical cable extending, in use, through the tube and around the wall of the second portion of the tube.

Different cable sizes can be accommodated within a single tube merely by utilizing inner members, washers, and sealing members of different dimensions. This enables a great reduction in the number of parts which must be stocked and also permits tubes already welded in bulkheads to be used with cables of different sizes. The seal preferably comprises a strip of resilient material adapted to be wrapped around a cable extending through the tube, such sealing strip can be cut to different lengths, as needed, and each size sealing strip can be used to seal several different sizes of cables. The packing space in the stuffing tube does not change much for different sizes of cables assuring an adequate amount of the sealing strip in all instances. No hazardous asbestos need be used.

In the accompanying drawings:-

Fig. 1 is an exploded perspective view of a stuffing tube assembly according to the invention;

Fig. 2 is a longitudinal sectional view of the stuffing tube assembly;

Fig. 3 is an enlarged longitudinal sectional view of an end portion of the assembly, prior to tightening the gland nut;

Fig. 4 is a view similar to Fig. 3, but with the gland nut tightened to the fully assembled position;

Fig. 5 is a view similar to Fig. 3 of the stuffing tube modified to accommodate a cable of larger size; and,

Fig. 6 is a view similar to Fig. 3 of the stuffing tube modified to accommodate a cable of smaller size.

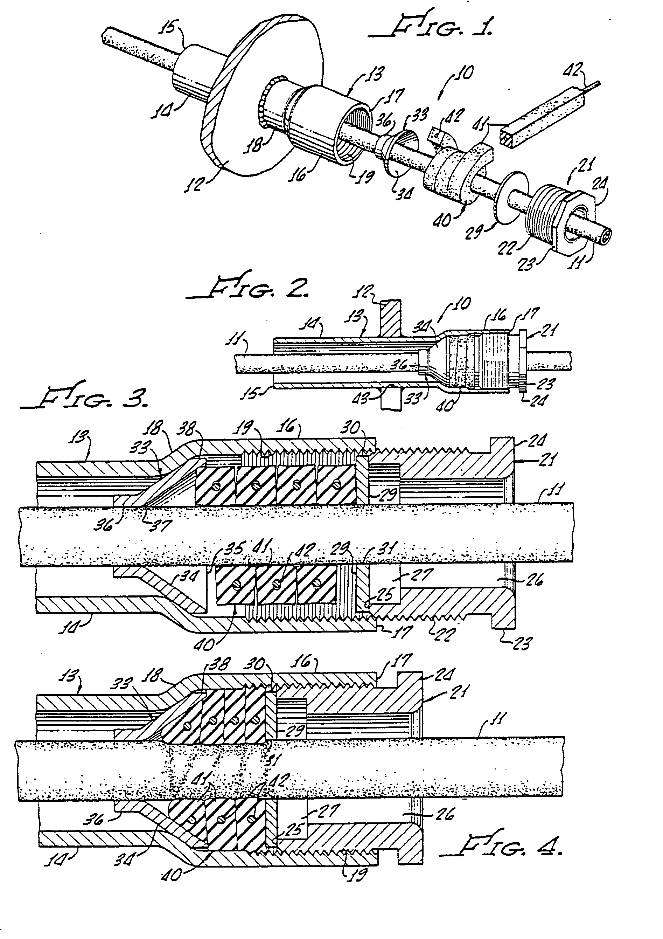

The stuffing tube assembly 10 shown in Figs. 1—4 is for effecting a seal where an electrical cable 11 passes through a partition such as a bulkhead 12 of a ship. The assembly 10 includes a tube 13 which has a section 14 extending inwardly from one end 15, which is of a first constant diameter. An additional section 16 of a second and larger constant diameter extends inwardly from the opposite end 17. The section 16 is not as long as the section 14. These two sections are interconnected by a short frustoconical portion 18 which is at 35° angle relative to the axis of the tube, and which fairs smoothly with the walls of the sections 15 and 16. An internal thread 19 extends inwardly of the end 17 for most of the length of the section 16 of the tube, but stops short of the tapered interconnecting shoulder 18.

A gland nut 21 of conventional design has an external thread 22 for meshing with the thread 19 of the tube. Wrenching surfaces 23 are formed on the periphery of a flange 24 at one end of the gland nut. An annular radial surface 25 is at the opposite end of the gland nut. A bore 26 extends most of the length of the gland nut from the end flange 24, with counterbore 27 extending inwardly from the opposite end surface 25.

In the assembly, the end 25 of the gland nut 21 bears against a flat washer 29. This washer has an outside diameter slightly less than the inside diameter of the tube section 16 so that it can move freely within the tube with its outer circumferential edge 30 adjacent the inner surface of the tube. The inner circumferential edge 31 of the washer 30 is substantially complementary to the cable with enough clearance so that it can slide over the cable in a similar manner.

Opposite from the washer 29 is an adapter 33 which has a frustoconical portion 34 tapering inwardly from one end 35 at the same angle as that of the interconnecting section 18 of the tube 13. In other words, the adapter portion 34 tapers at an angle of 35° relative to its axis. A short straight cylindrical portion 36 extends from the smaller end of the frustoconical portion 34 of the adapter 33. These sections of the adapter smoothly fair together, presenting a rounded corner 37 at their juncture. The inner wall of the cylindrical section 36 has the same diameter as the opening 31 through the flat washer 29, so that it is substantially complementary to the cable 11. The outside diameter of the cylindrical section 36 is less than that of the tube section 14 so that the cylindrical section is spaced from the wall of the tube. The outer peripheral edge 38 of the frustoconical portion 34 is given a cylindrical configuration and has the same diameter as that of the outer edge 30 of the flat washer 29.

Between the adapter 33 and the flat washer 29 is a seal 40. Preferably, the seal includes a strip 41 of a resilient elastomer, such as neoprene, of square cross section, which is cut to a length so that it can be wrapped a few turns around the cable, with one of its flat sides bearing against the cable. Inside the strip 41 at its axis is a ductile annealed steel wire 42. The latter element is important in enabling the seal 40 to be wrapped around the cable 11 without significant springback. Without the wire 42, the seal will not retain a helical shape and is so difficult to manage as to make it impractical for use as such a seal. However, with the ductile wire 42 inside of the neoprene strip 41, the seal can be wrapped into a helix around the cable and will stay in position, permitting assembly of the components of the stuffing tube.

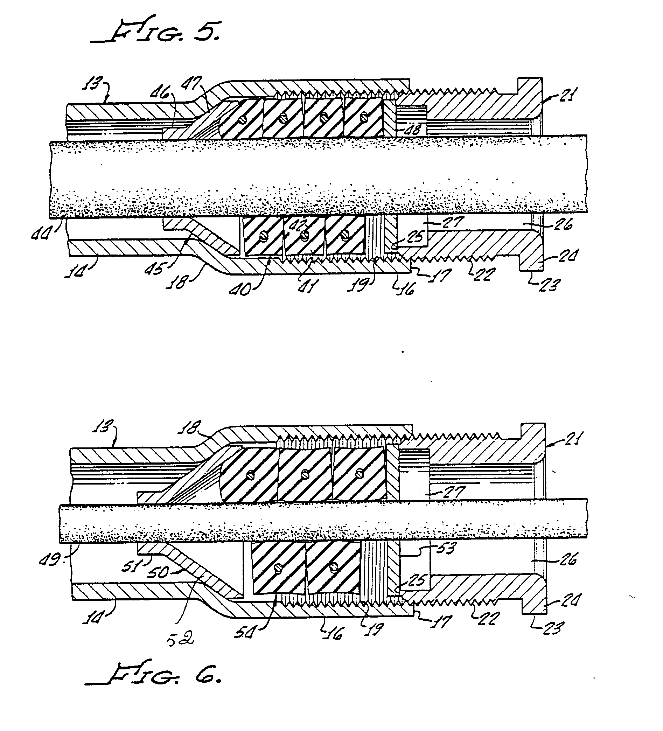

In use of the stuffing tube, an opening 43 is cut through the bulkhead 12 within which the smaller diameter portion 14 of the tube 13 is positioned. After this, the periphery of the tube 13 is welded to the bulkhead, which both secures the tube to the bulkhead and seals around the tube. The components of the unit then are assembled to the position of Fig. 3. The adapter 33 is fitted in the tube 13 with its cylindrical part 36 circumscribing the cable 11 and facing toward the smaller diameter portion 14 of the tube. Adjacent its outer circumferential edge 38, the outside of the frustoconical portion 34 of the adapter 33 complementarily engages and is supported by the tapered portion 18 of the tube 13. The strip 41 of the seal 40 has a smaller outside diameter than that of the frustoconical portion 34 and at one end of its helix enters this part of the adapter. The opposite end of the seal 40 is engaged by the flat washer 29. The length of the seal 40 is selected so that one or two turns of the thread 19 are exposed when the seal is wrapped around the cable and assembled firmly into the tube section 16, along with the adapter 33 and washer 29. This permits the thread of the gland nut 21 to begin to mesh with the thread 19 of the tube.

The gland nut 21 is then tightened to bring the assembly to the position of Fig. 4. Normally the gland nut 21 is rotated to a predetermined torque which leaves the flange 24 of the gland nut spaced a short distance from the end surface 17 of the tube section 16. As this happens, the seal 40 is compressed between the adapter 33 and the flat washer 29. The frustoconical portion 34 of the adapter 33 confines the seal 40 at one end and causes it to be pressed inwardly toward the periphery of the cable 11.

As a result, the seal 40 produces an airtight seal around the surface of the cable. The compression force is transmitted through the frustoconical portion 34 of the adapter 33 to the tapered part 18 of the tube so the adapter is held securely in place without distortion. Also, the short straight cylindrical part 36 of the adapter 33 gives this part added strength to resist forces tending to open it up. Therefore, the adapter 33 is quite rigid so that it can serve its function of causing the seal 40 to firmly engage the periphery of the cable 11. The cylindrical section 36 provides a desirable area contact with the cable 11, assuring that the cable will not be cut or otherwise damaged by the adapter. The rounded corner 37 between the adapter portions 34 and 36 also avoids damage to the cable by always presenting a smooth surface to the cable. This holds true even if the adapter should experience distortion under some unusual overload condition.

The flat washer 29 at the opposite end of the seal 40 allows the seal to expand outwardly toward the inner surface of the section 16 of the tube 13. This permits an airtight seal to be effected between the outer part of the seal 40 and the wall of the tube. The flat washer is securely held against the flat end edge 25 of the gland nut 21 and is of sufficient thickness that it will not distort under the load imposed by the compressed seal. Thus, the stuffing tube assembly is readily put into service to seal the opening through the bulkhead 12 where the electrical cable 11 passes.

The stuffing tube arrangement is adapted to accommodate cables of different sizes within one tubular member. For example, as shown in Fig. 5, the cable 44 is larger than the cable 11 of the previously described embodiment. The selection of the cable 44 may occur as an original choice, or from a change in cable assignments during construction, requiring a larger cable at the location of the tube 13. Also, the different cable size may arise from ship refurbishing, during which it is necessary to remove the cable 11 to replace it with a cable of different dimension.

In the embodiment of Fig. 5, the adapter 33 is replaced by an adapter 45 which has a cylindrical end part 46 of larger diameter than the cylindrical end part 36 of adapter 33. The end part 46 is dimensioned to slip over and be generally complementary to the larger cable 44. The frustoconical portion 47 of the adapter 45 is at a 35° angle, as before.

Opposite from the adapter 45 is a flat washer 48, which has an inside diameter corresponding to that of the end part 46 of the adapter 45.

The same seal 40 may be used because there is enough annular space between the cable 44 and the wall of the tube section 16 to accommodate it. The length of the seal will be a little greater in the embodiment of Fig. 5 than it is in the previously described arrangement because it is wrapped into a helix of greater diameter.

The action of the stuffing tube is the same as before, as advancement of the gland nut 21 compresses the seal 40 between the flat washer 48 and the adapter 45, effecting a seal around the cable 44 and the inside wall of the tube.

The same tube 13 is shown accommodating a cable 49 in Fig. 6, which is of smaller diameter than the cable 11. Here the adapter 50 has a cylindrical end part 51 of reduced diameter, appropriate to fit over the cable 49. This means that the tapered part 52 of the adapter 50 is longer than before, but the same 35° taper is maintained. The flat washer 53 has an inside diameter proportioned similarly to the cylindrical part of the adapter. Also modified is the seal 54, which is larger in cross section so as to take up more space around the cable 49. The parts cooperate as before, as the gland nut is tightened and the seal is accomplished.

Just as a seal of larger cross section is used in the arrangement of Fig. 6, a seal of smaller cross section may be substituted in the event the cable is larger in diameter than that of the cable 44, as shown in Fig. 5.

The adapter, seal and washer can be varied to suit different cable sizes for overhaul and refurbishing, as well as for new construction. When an old cable has been removed from the stuffing tube of a ship being updated, the tubular body may be left in place as a new cable is routed through it. An appropriate adapter, with seal and washer, will effectively seal around the new cable so that replacement of the tubular body is unnecessary.

**Claims**

1. A stuffing tube device (10) for providing a seal around an electrical cable or the like extending through a partition such as a bulkhead (12) or deck of a ship, the device comprising a tube (13) having a first portion (14) of a first diameter, a second portion (16) of a second and larger diameter, and a shoulder (18) between the first and second portions; a separate member (33) having a tapered portion (34) the exterior of which engages the shoulder (18), a straight cylindrical section (36) at the inner end of the tapered portion, and an opening therethrough adapted to receive an electrical cable or the like; a washer (29) in the second portion (16) of the tube (13); a screw threaded member (21) adjacent to the washer and having screw threads (22) meshing with screw threads (19) of the second portion (16) of the tube (13), whereby the screw threaded member (21) can force the washer (29) inwardly of the tube (13) upon relative advancement of the screw threads (19, 22); and a seal (40) between the washer (29) and the separate member (33), one end of the seal engaging the washer (29) and the opposite end of the seal engaging the tapered portion (34), whereby upon such relative advancement, the seal is compressed for providing a seal around an electrical cable extending, in use, through the tube (13) and around the wall of the second portion (16) of the tube (13).

2. A device according to claim 1, in which the shoulder (18) is frustoconical and complementary to a part of the tapered portion (34) of the member (33).

3. A device according to claim 1 or claim 2, in which the seal (40) comprises a strip (41) of resilient material adapted to be wrapped around a cable extending through the tube (13).

4. A device according to claim 3, in which the seal (40) includes a resilient elongate elastomeric member (41), and a ductile wire (42) extending through the elastomeric member for holding the elastomeric member in a helical position wrapped around an electrical cable and preventing substantial springback thereof.

5. A device according to claim 4, in which the elastomeric member (41) is made of neoprene.

6. A device according to any one of claims 3 to 5, in which the seal (40) has a substantially square cross section.

7. A device according to any one of the preceding claims, in which the straight cylindrical section (36) joins the shoulder (18) through a smoothly curved corner (37).

8. A device according to any one of the preceding claims, in which the interior and exterior diameters of the member (33) are substantially the same as the interior and exterior diameters of the washer (29).

9. An assembly of a cable (11) extending through an opening (43) in a partition (12), and sealed thereto by a stuffing tube device (10) according to any one of the preceding claims, the exterior of the tube being welded to the partition (12) at the opening (43).

**Patentansprüche**

1. Stopfrohrvorrichtung (10) zur Ausbildung einer Abdichtung rund um ein elektrisches Kabel oder dgl., das sich durch eine Trennwand wie bspw. ein Schiffsschott (12) oder ein Schiffsdeck erstreckt, welche Vorrichtung verfügt über ein Rohr (13) mit einem ersten Abschnitt (14) eines ersten Durchmessers, mit einem zweiten Abschnitt (16) eines zweiten und größeren Durchmessers und mit einer Schulter (18) zwischen dem ersten und dem zweiten Abschnitt, über ein separates Teil (33) mit einem verjüngten Abschnitt (34), dessen Äußeres die Schulter (18) berührt, mit einem geraden zylindrischen Abschnitt (36) am einen Ende des verjüngten Abschnitts und mit einer Öffnung in diesem geeignet zur Aufnahme eines elektrischen Kabels oder dgl., über eine Scheibe (29) in dem zweiten Abschnitt (16) des Rohres (13), über ein mit Schraubgewinde ausgestattetes Teil (21) benachbart der Scheibe und mit Schraubgewindegängen (22), die mit Schraubgewindegängen (19) des zweiten Abschnitts (16) des Rohres (13) kämmen, wodurch das mit Schraubgewinde ausgestattete Teil (21) gegen die Scheibe (29) innerhalb des Rohres (13) bei Relativbewegung der Schraubengewindegänge (19, 22) drücken kann, und über eine Dichtung (40) zwischen der Scheibe (29) und dem separaten Teil (33), wobei das eine Ende der Dichtung die Scheibe (29) und das andere Ende der Dichtung den verjüngten Abschnitt (34) berührt, wodurch bei solcher Relativbewegung die Dichtung zur Ausbildung einer Abdichtung rund um ein elektrisches Kabel, das sich im Verwendungsfall durch das Rohr (13) erstreckt, und entlang der Wand des zweiten Abschnitts (16) des Rohres (13) zusammengedrückt wird.

2. Vorrichtung nach Anspruch 1, bei der die Schulter (18) kegelstumpfförmig und komplementär zu einem Teil des verjüngten Abschnitts (34) des Teils (33) gestaltet ist.

3. Vorrichtung nach Anspruch 1 oder Anspruch 2, bei der die Dichtung (40) in einem Streifen (41) eines nachgiebigen Materials besteht, das rund um ein sich durch das Rohr (13) erstreckendes Kabel wickelbar ist.

4. Vorrichtung nach Anspruch 3, bei der die Dichtung (40) ein nachgiebiges, längliches, elastomeres Teil (41) und einen verformbaren Draht (42) aufweist, der sich durch das elastomere Teil erstreckt, um dieses in einer schraubenförmigen Position gewickelt rund um ein elektrisches Kabel festzuhalten und ein wesentliches Rückspringen desselben zu verhindern.

5. Vorrichtung nach Anspruch 4, bei der das elastomere Teil (41) aus Neopren hergestellt ist.

6. Vorrichtung nach irgendeinem der Ansprüche 3 bis 5, bei der die Dichtung (40) einen im wesentlichen quadratischen Querschnitt aufweist.

7. Vorrichtung nach irgendeinem der vorhergehenden Ansprüche, bei der der gerade zylindrische Abschnitt (36) mit der Schulter (18) über eine glatt gewölbte Ecke (37) in Verbindung steht.

8. Vorrichtung nach irgendeinem der vorhergehenden Ansprüche, bei der der innere und der äußere Durchmesser des Teils (33) im wesentlichen derselbe sind wie der innere und der äußere Durchmesser der Scheibe (29).

9. Anordnung eines Kabels (11), das sich durch eine Öffnung (43) in einer Trennwand (12) erstreckt und dort mittels einer Stopfrohrvorrichtung (10) nach irgendeinem der vorhergehenden Ansprüche abgedichtet ist, wobei das Äußere des Rohres mit der Trennwand (12) an der Öffnung (43) verschweißt ist.

## Revendications

1. Presse-étoupe (10) destiné à former un joint étanche autour d'un câble électrique ou d'un dispositif semblable traversant une séparation telle qu'une cloison étanche (12) ou un pont sur un navire, comprenant un tube (13) qui possède une première partie (14) d'un premier diamètre, une seconde partie (16) ayant un second diamètre plus grand et un épaulement (18) entre les première et seconde parties; une pièce séparée (33) présentant un segment conique (34) dont l'extérieur est en contact avec l'épaulement (18), un segment cylindrique droit (36) à l'extrémité intérieure du segment conique, ainsi qu'une ouverture traversante adaptée pour recevoir un câble électrique ou un dispositif semblable; une rondelle (29) placée dans la seconde partie (16) du tube (13); une pièce filetée (21) adjacente à la rondelle et dont le filetage (22) coopere avec un filetage (19) de la seconde partie (16) du tube (13), l'agencement étant tel que la pièce filetée (21) peut pousser la rondelle (29) vers l'intérieur du tube (13) lors de l'avance des filetages (19, 22) l'un vers l'autre; de même qu'un joint d'étanchéité (40) disposé entre la rondelle (29) et la pièce séparée (33), une extrémité du joint étant en contact avec la rondelle (29) et l'extrémité opposée du joint étant en contact avec le segment conique (34), de sorte que l'avance des filetages l'un vers l'autre provoque la compression du joint, ce qui assure l'étanchéité autour du câble électrique, traversant le tube (13), et circonférentiellement tout au long de la paroi interne de la seconde partie (16) du tube (13).

2. Presse-étoupe selon la revendication 1, dans lequel l'épaulement (18) est tronconique et complémentaire à une partie du segment conique (34) de la pièce séparée (33).

3. Presse-étoupe selon la revendication 1 ou 2, dans lequel le joint d'étanchéité (40) est formé d'une bande (41) faite d'un matériau élastique et pouvant être enroulée autour du câble traversant le tube (13).

4. Presse-étoupe selon la revendication 3, dans lequel le joint d'étanchéité (40) est formé d'un élément en élastomère (41) de forme allongée et d'un fil ductile (41) qui traverse cet élément et est destiné à le maintenir dans la forme hélicoïdale d'enroulement autour du câble, en empêchant une détente notable de cet élément.

5. Presse-étoupe selon la revendication 4, dans lequel l'élément en élastomère (41) est en néoprène.

6. Presse-étoupe selon l'une quelconque des revendications 3 à 5, dans lequel le joint d'étanchéité (40) possède une section droite sensiblement carrée.

7. Presse-étoupe selon l'une quelconque des revendications précédentes, dans lequel le segment cylindrique droit (36) se raccorde au segment conique (34) par un arrondi d'angle (37) très adouci.

8. Presse-étoupe selon l'une quelconque des revendications précédentes, dans lequel les diamètres intérieur et extérieur de la pièce séparée (33) sont sensiblement égaux aux diamètre intérieur et extérieur de la rondelle (29).

9. Dispositif de traversée pour un câble (11) passant par une ouverture (43) dans une séparation (12), comprenant un presseétoupe (10) selon l'une quelconque des revendications précédentes pour étancher le câble dans cette ouverture, l'extérieur du tube étant soudé à la séparation (12) sur le bord de l'ouverture (43).

_FIG. 1._

_FIG. 2._

_FIG. 3._

_FIG. 4._

_FIG. 5._

_FIG. 6._

2